Europäisches Patentamt

European Patent Office

Office européen des brevets

(11) Veröffentlichungsnummer: **0 519 189 A2**

# EUROPÄISCHE PATENTANMELDUNG

(21) Anmeldenummer: **92107324.3**

(22) Anmeldetag: **29.04.92**

(51) Int. Cl.5: **C04B  35/56**, **F27B  9/30**

(30) Priorität: **18.06.91 DE 4119968**

(43) Veröffentlichungstag der Anmeldung:
**23.12.92 Patentblatt  92/52**

(84) Benannte Vertragsstaaten:
**AT BE CH DE DK ES FR GB GR IT LI LU MC
NL PT SE**

(71) Anmelder: **NORTON GMBH
Vorgebirgsstrasse 10
W-5047 Wesseling(DE)**

(72) Erfinder: **Simon, Bernd
Im Holzbruch 13
W-6648 Wadern/Nunkirchen(DE)**

(74) Vertreter: **Cohausz & Florack Patentanwälte
Postfach 14 01 61 Schumannstrasse 97
W-4000 Düsseldorf 1(DE)**

(54) **Trageplatte aus keramischem Material zum Transport von keramischem Sintergut.**

(57) Die Lebensdauer einer Trageplatte aus keramischem Material zum Transport von keramischem Sintergut auf Förderrollen durch einen Schnellbrandofen soll mit einfachen Mitteln verbessert werden.

Diese Aufgabe wird erfindungsgemäß dadurch gelöst, daß die Trageplatte an ihrer Unterseite Rippen in einer eine stufenlose Rollebene bildenden Anordnung aufweist.

Fig. 1

EP 0 519 189 A2

Die Erfindung betrifft eine Trageplatte aus keramischem Material zum Transport von keramischem Sintergut auf Förderrollen durch einen Schnellbrandofen.

Solche Trageplatten werden in Schnellbrandöfen verwendet, die im höheren Temperaturbereich oberhalb 1200 °C betrieben werden. Sie sind in der Regel beidseitig glatt ausgebildet und liegen flächig auf in dem Ofen angeordneten, sich drehenden Förderrollen auf, die wie die Trageplatten selbst aus feuerfestem, keramischem Material hergestellt sind.

Beim praktischen Einsatz der Trageplatten kommt es zu einem starken Verschleiß der Platten durch Materialabrieb an deren Unterseiten, der durch die zwischen den Trageplatten und den Rollen herrschenden Preßkräfte zermahlene Abrieb haftet auf den Förderrollen an und bildet dort mit zunehmender Betriebsdauer unregelmäßige Erhöhungen, durch deren Rauhigkeit der Abrieb des Plattenmaterials beschleunigt wird.
Es ist daher notwendig, die Rollen und Trageplatten in relativ kurzen Zeitabständen zu reinigen oder zu ersetzen.

Die Aufgabe der Erfindung besteht dagegen darin, mit einfachen Mitteln den Reinigungszyklus und die Lebensdauer der Trageplatten und Förderrollen zu verlängern.

Diese Aufgabe wird bei einer gattungsgemäßen Trageplatte erfindungsgemäß dadurch gelöst, daß sie an der Unterseite in einer eine stufenlose Rolleebene bildenden Anordnung Rippen aufweist.

Die Erfindung beruht auf der Erkenntnis, daß der starke Verschleiß an der Plattenunterseite durch den Abrieb kleiner Keramiksplitter verursacht wird, die aus der glatten, auf den Förderrollen aufliegenden Unterseite der Trageplatten hervorstehen.

Durch die Ausbildung von Rippen, die einstückig mit der Trageplatte auf deren Unterseite ausgeformt sind, wird die Auflagefläche zwischen den Förderrollen und der Trageplatte verringert. Dadurch steigt zwar die in der verbleibenden Kontaktfläche auftretende Pressung an, gleichzeitig ist aber auch die Fläche verringert, aus der die den Abrieb bildenden keramischen Spitzen hervorspringen. Auf diese Weise ist das Abriebvolumen, das auf den Förderrollen anbacken kann, erheblich verringert. Darüber hinaus kommt es zur Glättung der Auflagelagefläche der Rippen, bevor sich durch den Abrieb auf den Rollen die den Verschleiß fördernden Erhöhungen bilden können. Nach dem Einebnen der Auflagefläche findet kein weiterer Materialabtrag mehr statt, weil dann keine Keramiksplitter mehr aus der Auflagefläche vorstehen und somit auch die Rauhigkeit der Förderrollen nicht mehr zunimmt. Die erhöhten Auflagekräfte werden dabei durch den harten keramischen Werkstoff der Trageplatten und Rollen ohne die Gefahr eines Oberflächenbruchs aufgenommen.

Wegen des ausbleibenden Verschleisses ist die Lebensdauer der erfindungsgemäßen Trageplatten gegenüber den bekannten Trageplatten erheblich verlängert. Da die Trageplatten darüber hinaus durch die Rippen auf ihrer Unterseite zusätzlich versteift sind, ist zudem die Gefahr des Brechens der Platten vermindert.

Die Fortbewegung der Trageplatte durch den Schnellbrandofen kann dadurch unterstützt werden, daß die Trageplatte beabstandete, parallel verlaufende Rippen aufweist. Dabei läßt sich das Einhalten der Förderrichtung dadurch verbessern, daß die Rippen ein Kreuzmuster bilden. Durch eine solche Ausbildung der Rippen wird zudem deren versteifende Wirkung verstärkt. Dabei können die Rippen parallel zu den Seitenwänden verlaufen oder diagonal angeordnet sein.

Sind die Rippen diagonal angeordnet, so ist es günstig, wenn sie mit den Seitenrändern einen Winkel von 10...50°, insbesondere 45°, einschließen. Auf diese Weise werden bei einer gradlinigen Förderbewegung der Trageplatten durch Lage- und Größenabweichungen der Förderrollen verursachte Änderungen der Förderrichtung in einer Art Zick-Zack-Bewegung berichtigt. Wird die Trageplatte dabei in eine von der Geraden abweichende Richtung bewegt, so wird sie anschließend bei einer weiteren Abweichung in die um 90° versetzte Richtung gefördert, bis sich die Trageplatte schließlich in die ursprüngliche Richtung weiterbewegt.

Eine weitere Möglichkeit, die Einhaltung der Förderrichtung der Trageplatten zu verbessern, besteht darin, daß die Rippen ringförmig ausgebildet sind. Die Steifigkeit der Trageplatte kann dadurch noch verbessert werden, daß an ihren Seitenrändern eine umlaufende Rippe ausgebildet ist.

Aufgrund ihrer besonderen Härte haben sich im praktischen Einsatz Trageplatten bewährt, die aus Siliciumkarbid (SiC) bestehen.

Im folgenden wird die Erfindung anhand von Ausführungsbeispiele zeigenden Zeichnungen näher erläutert.
Es zeigen:
Fig. 1 eine quadratische Trageplatte mit parallel zu ihren Seitenrändern verlaufende Rippen;
Fig. 2 einen Schnitt der Trageplatte nach Fig. 1 entlang der Linie I-I;
Fig. 3 eine quadratische Trageplatte mit diagonal zu ihren Seitenrändern verlaufenden Rippen;
Fig. 4 eine rechtwinklige Trageplatte mit einer ringförmigen Rippe.

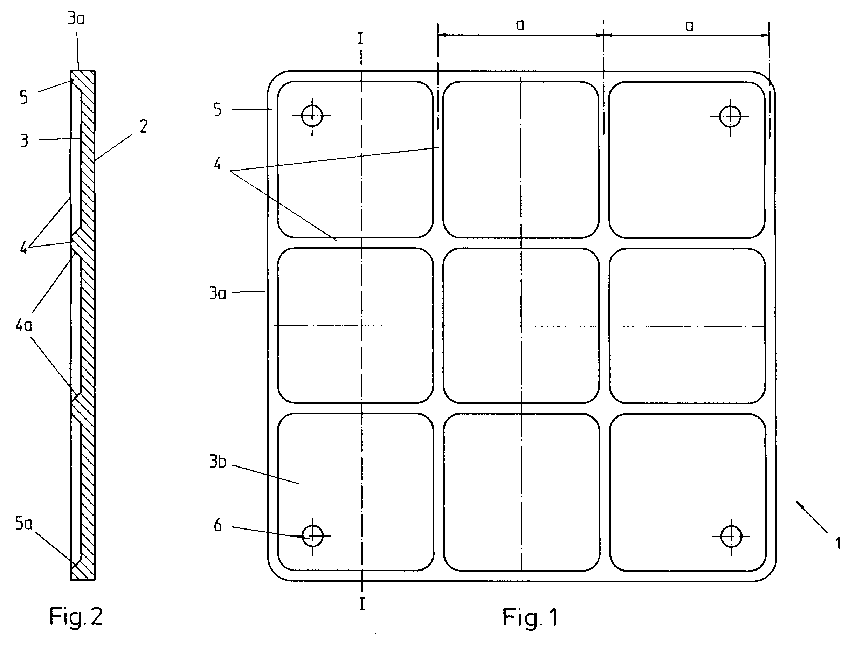

Die quadratische Trageplatte 1 nach Fig. 1 weist eine glatte Oberfläche 2 und eine gerippte Unterseite 3 auf. Die Rippen 4,5 sind einstückig mit der Trageplatte 1 ausgeformt. Dabei sind die Rippen 4 beginnend mit einer äußeren, an den Seitenrändern 3a der Unterseite 3 umlaufenden Rippe 5 mit gleichem Abstand a zueinander in waagerechter und senkrechter Richtung angeordnet und bilden ein rechtwinkliges, regelmäßiges Kreuzmuster. Um das Ausformen der Trageplatten 1 bei ihrer Herstellung zu erleichtern, sind die innere Seite 5a der umlaufenden Rippe 5 und jeweils beide Seiten 4a der Rippen zur Unterseite 3 der Tragplatte 1 hin zunehmend angeschrägt. In den Eckbereichen 3b der Unterseite sind Hilfslöcher 6 zum Einsetzen von Arbeitsmitteln beim Be- und Entladen der Trageplatte 1 eingelassen.

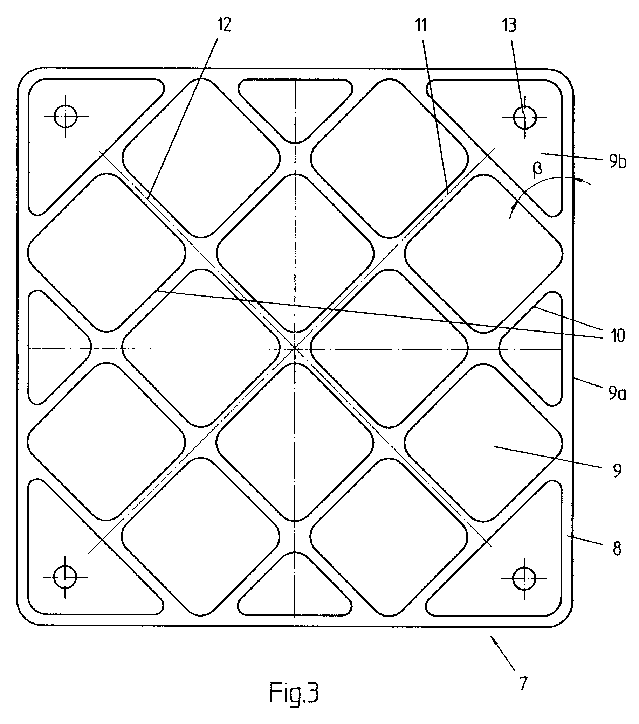

Fig. 3 zeigt eine ebenfalls quadratische Trageplatte 7 mit einer umlaufenden Rippe 8, an deren Unterseite 9 Rippen 10 rechtwinklig zueinander diagonal verlaufend angeordnet sind. Die Rippen 10 schließen mit den zugehörigen Seitenrändern 9a der Unterseite 9 einen Winkel $\beta$ von 45° ein, wobei die jeweils mittleren Rippen 11,12 als Flächendiagonale ausgebildet sind. In den Eckbereichen 9b der Unterseite 9 sind von den Rippen 8,10 dreiecksförmige Freiflächen umschlossen, in die Hilfslöcher 13 eingelassen sind.

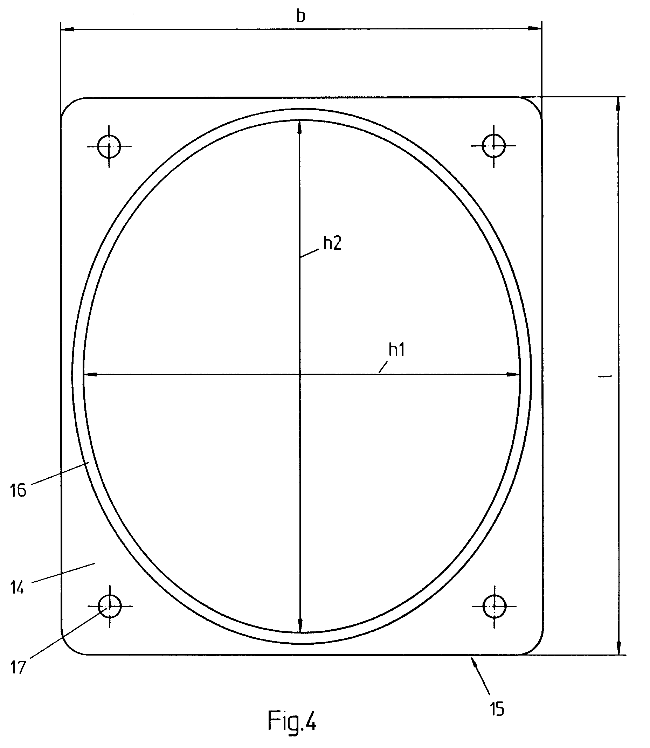

An der Unterseite 14 der rechtwinkligen Trageplatte 15 nach Fig. 4 ist eine einzige elliptische Rippe 16 ausgebildet, deren kleiner Halbmesser h1 nahezu der Breite b und deren größerer Halbmesser h2 nahezu der Länge 1 der Trageplatte 15 entspricht. Auch diese Trageplatte 15 weist in den Eckbereichen 14a der Unterseite 14 Hilfslöcher 17 auf.

**Patentansprüche**

1. Trageplatte aus keramischem Material zum Transport von keramischem Sintergut auf Förderrollen durch einen Schnellbrandofen dadurch gekennzeichnet, daß sie (1,7,15) an der Unterseite (3,9,14) Rippen (4,5,8,10,16) in einer eine stufenlose Rollebene bildenden Anordnung aufweist.

2. Trageplatte nach Anspruch 1, gekennzeichnet durch beabstandete, parallel verlaufende Rippen (5,10).

3. Trageplatte nach Anspruch 1 oder 2, **dadurch gekennzeichnet,** daß die Rippen (5,10) ein Kreuzmuster bilden.

4. Trageplatte nach einem der vorhergehenden Ansprüche, **dadurch gekennzeichnet,** daß die Rippen (5) parallel zu den Seitenrändern (3a) der Trageplatte (1) angeordnet sind.

5. Trageplatte nach einem der Ansprüche 1 bis 3, **dadurch gekennzeichnet,** daß die Rippen (10) diagonal zu den Seitenrändern (9a) der Trageplatte (7) angeordnet sind.

6. Trageplatte nach Anspruch 5, **dadurch gekennzeichnet,** daß die Rippen (10) mit den Seitenrändern (9a) der Trageplatte (7) einen Winkel $\beta$ von 10 - 50°, insbesondere 45°, einschließen.

7. Trageplatte nach Anspruch 1, **dadurch gekennzeichnet,** daß die Rippen (16) ringförmig ausgebildet sind.

8. Trageplatte nach einem der vorhergehenden Ansprüche, **dadurch gekennzeichnet,** daß an den Seitenrändern (3a,9a) der Trageplatte (1,7) eine umlaufende Rippe (4,8) ausgebildet ist.

9. Trageplatte nach einem der vorhergehenden Ansprüche, **dadurch gekennzeichnet,** daß die Trageplatte aus Siliciumkarbid (SiC) besteht.

EP 0 519 189 A2

Fig. 2

Fig. 1

Fig.3

Fig.4